# EUROPEAN PATENT APPLICATION

(11) **EP 2 163 365 A1**
(43) Date of publication of application: **17.03.2010**
(21) Application number: 09380151.2
(22) Date of filing: 14.09.2009
(51) Int. Cl.: B28B 11/00, F27D 3/12

(54) **Method for manufacturing porcelain material pieces, device and product obtained**

(30) Priority: 12.09.2008 ES 200802602
(71) Applicant: Parra Muñoz, Cleto, 12200 Onda (Castellón) (ES)
(72) Inventor: Parra Muñoz, Cleto, 12200 Onda (Castellón) (ES)
(74) Representative: Ungria Lopez, Javier

(57) **Abstract**

The method is intended to obtain new aesthetic effects in coatings and pavings, being **characterized in that** it comprises a first stage wherein a porcelain piece to treat (1) is arranged on a support (2) with the interposition of a protuberance (3,3') where at least the porcelain piece (1) rests via at least one point of its reverse side.

In another stage the assembly of the porcelain piece (1), protuberance (3,3') and support (2) is introduced inside an oven in order to subject this assembly to a heating process during a period of time until the porcelain piece (1) softens and arches seeking a stable equilibrium.

The product obtained is a piece intended for creating special coatings and pavings with volumetric effects.

## Description

### OBJECT OF THE INVENTION

As stated in the title of this descriptive specification, the present invention relates to a method for manufacturing porcelain material pieces, device and product obtained.

Starting from the porcelain or other kind of material, such as red stoneware, the object of the invention is to generate certain deformations in the finished piece with the aim of creating special coatings with volumetric effects.

### BACKGROUND OF THE INVENTION

At present, the ceramic sector is making use of special pieces which add new aesthetic effects, for which purpose it is giving special importance to obtaining reliefs.

In the case in which said reliefs affect only the surface, it is possible to obtain the same in the pressing process itself and then proceed to their decoration by means of current processes.

If it is desired that the entire piece show shapes or reliefs, it becomes more complicated, since it is very difficult to mold the ceramic support and that said support surmount all the subsequent manufacturing processes while keeping its dimensional stability.

This problem is likewise applicable in general terms both for porous or conventional ceramics and for non-porous ceramics, known as porcelains.

### DESCRIPTION OF THE INVENTION

With the aim of achieving the objectives and avoiding the drawbacks mentioned in the above sections, the invention proposes a method for manufacturing pieces made of porcelain material, red stoneware and similar, device and product obtained.

The method is **characterized in that** it comprises a first stage in which a porcelain piece is arranged on a support provided with at least one protuberance on which the geometric center of the porcelain piece rests.

In a later stage the assembly of the support and porcelain piece is subjected to a heating process.

During the phase in which the assembly of the support and porcelain piece is introduced into the oven, the porcelain piece softens and leans on the support, touching it at least by opposite portions of its perimetric edges.

The heating temperature and baking cycle depend on the thermal characteristics of each ceramic product.

The device comprises in principle the cited support which presents a characteristic perforated structure in order to achieve an adequate heat transfer, this perforated support being located on the floor of the oven. On the other hand, the support could present a non-perforated structure.

The device also comprises a characteristic resting protuberance with a complementary upper area comprising at least a portion of curved surface of the reverse side of the ceramic piece.

The resting protuberance also comprises heat dissipation means.

The product obtained, in addition to the curvature obtained (profile obtained) of the arc that is formed, is preferably less than or equal to the thickness of the piece itself with the aim of not generating any undesired cavities in the interlocking assembly.

Another characteristic of the invention is that on the most elevated part of the porcelain piece and on its reverse side there exists a zone which can optionally be provided with grooves in order to facilitate the arching of the piece, due to the heat acting more efficiently and against less material in the stated strategic zone. So, that elevated zone of the porcelain piece can incorporate grooves or not, in such a way that the said piece also arches without the incorporation of the grooves.

Finally, it might be said that prior to the transformation of the ceramic piece, this can be cut to the desired format or the entire piece can be arched as it is supplied to the customer, without any need to be cut into smaller formats.

Prior to the transformation of the piece to obtain, it can be cut to the desired format or the entire piece can be arched, as the customer wishes, without any need to be cut into smaller formats.

Below, in order to facilitate a better understanding of this descriptive specification and forming an integral part thereof, some figures are attached with the aim of showing the object of the invention but not limiting the same.

### BRIEF DESCRIPTION OF THE DRAWINGS

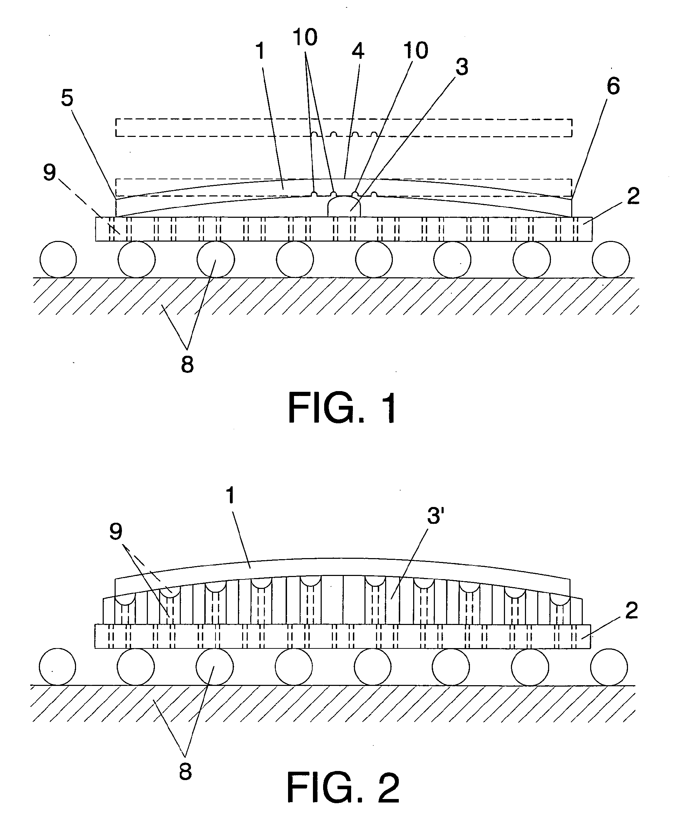

**Figures 1 and 2****.-** Show the object of the invention, namely, a method for manufacturing porcelain material pieces, device and product obtained.

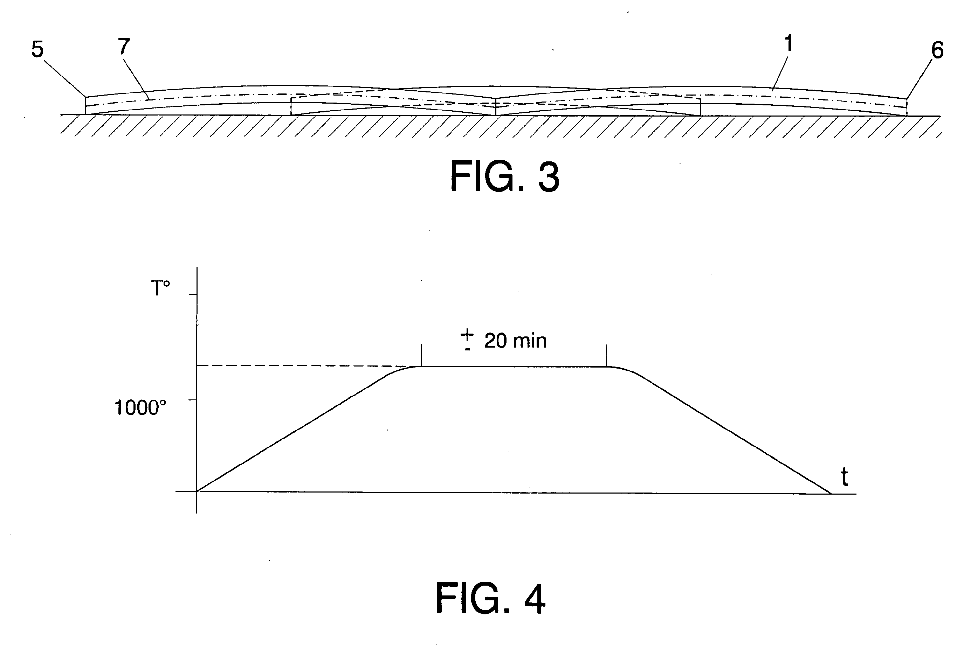

**Figure 3****.-** Shows a view of a coating covered with the porcelain pieces of the invention.
**Figure 4****.-** Shows a graph relating the temperature and time of the porcelain pieces when they are introduced into an oven.

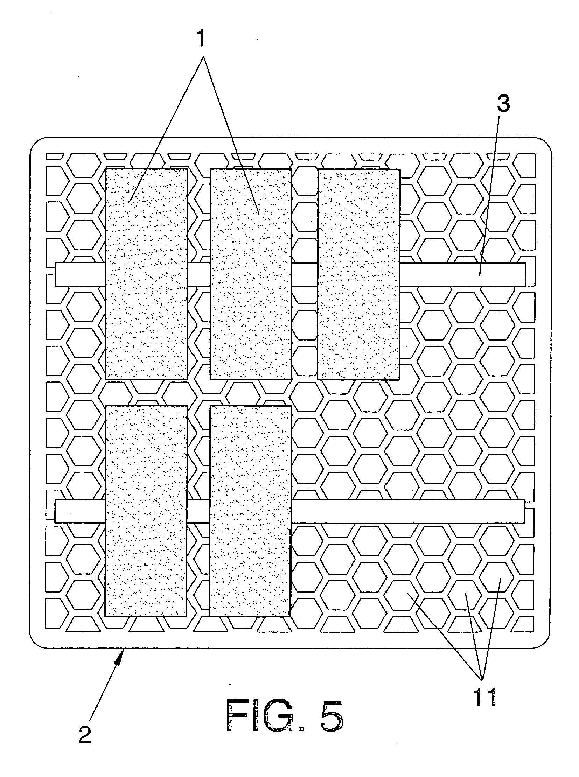

**Figure 5****.-** Shows a plan view of a characteristic support on which several porcelain pieces rest with the interposition of some protuberances where those porcelain pieces rest via their central zone.

### DESCRIPTION OF THE PREFERRED EMBODIMENT

Considering the numbering adopted in the figures, the method for manufacturing porcelain material pieces comprises the following stages or phases:
- A first stage which essentially consists of arranging the porcelain piece to treat 1 on a support 2, provided with at least one relief or protuberance 3, 3'.
- A second stage in which the geometric center 4 of that piece to treat 1 is determined, locating said geometric center 4 on at least one protuberance 3, 3'.
- A third stage in which the assembly is subjected to a heating process in which the temperature and baking cycle are a function of the thermal characteristics of each ceramic product.

During this phase, the ends 5 and 6 of the piece to treat 1 lean on the support 2 until touching it, generating a curvature 7.

The device in reference consists of a support 2 with perforations 11 for an adequate heat transfer, said support being located on the floor 8 of the corresponding oven.

Located on that support is the corresponding protuberance 3, 3', which can have a profile structure 3 or a triangular shape with a curved upper surface containing channels and openings 9 for the passage of heat.

In addition to the curvature 7, the piece obtained also presents the important characteristic that said curvature generates a height of the arch that is formed that is less than the thickness of the actual piece 1, with the aim of not generating any cavities in the interlocking assembly.

Finally, there exists the possibility of previously preparing the piece to treat 1, carrying out in it some cuts or grooves 10 in the material in the central zone in order to achieve a faster bending, due to the heat acting more efficiently and to the fact of there being less material. Moreover, any internal tensions in the porcelain piece are eliminated.

In a particular embodiment, the assembly of the support and porcelain piece is subjected to a heating process during a period of time varying from 70 to 100 minutes, reaching during said period of time a maintained temperature comprised between 1170°C and 1200°C.

## Claims

1. **METHOD FOR MANUFACTURING PORCELAIN MATERIAL PIECES** which, being intended to obtain new aesthetic effects in coatings and/or pavings, being also applicable to other ceramic materials such as red clay paste, is **characterized in that** it comprises the following stages:
- a first stage wherein the porcelain piece to treat (1) is arranged on a support (2) with the interposition of at least one protuberance where at least the porcelain piece (1) rests via at least one point of its reverse side;
- a second stage in which the assembly of the porcelain piece (1), protuberance and support (2) is introduced inside an oven in order to subject this assembly to a heating process during a period of time until the porcelain piece (1) softens and leans seeking a stable equilibrium, being kept resting on the said protuberance and on at least a portion of the perimetric edge of the reverse side of that porcelain piece (1).

2. **METHOD FOR MANUFACTURING PORCELAIN MATERIAL PIECES,** according to claim 1, **characterized in that** the time of duration of the heating process inside the oven is dependent upon the thermal characteristics of each ceramic product.

3. **METHOD FOR MANUFACTURING PORCELAIN MATERIAL PIECES,** according to either of claims 1 or 2, **characterized in that** the porcelain piece (1) rests on the protuberance (3) via a central area coinciding approximately with the flat geometric center of the porcelain piece (1).

4. **METHOD FOR MANUFACTURING PORCELAIN MATERIAL PIECES,** according to any either of claims 1 or 2, **characterized in that** the ceramic piece (1) rests on the elongated protuberance (3'), whose line of support is approximately contained in a vertical plane which divides the porcelain piece into two equal parts.

5. **METHOD FOR MANUFACTURING PORCELAIN MATERIAL PIECES,** according to either of claims 1 or 2, **characterized in that** the protuberance is a large surface element, on the upper face of which rests at least a large part of the reverse side of the porcelain piece (1).

6. **METHOD FOR MANUFACTURING PORCELAIN MATERIAL PIECES,** according to either of claims 1 or 2, **characterized in that** the porcelain piece (1) rests on the protuberance via an off-center zone.

7. **METHOD FOR MANUFACTURING PORCELAIN MATERIAL PIECES,** according to any of the above claims, **characterized in that** the maximum height of the protuberance on which rests the porcelain piece (1) is less than the thickness of the actual porcelain piece (1).

8. **METHOD FOR MANUFACTURING PORCELAIN MATERIAL PIECES,** according to any of claims 1 to 6, **characterized in that** the maximum height of the protuberance on which rests the porcelain piece (1) is equal to the thickness of the actual porcelain piece (1).

9. **METHOD FOR MANUFACTURING PORCELAIN MATERIAL PIECES,** according to any of the above claims, **characterized in that** the protuberance (3, 3') incorporates channels or openings (9) for dissipating the heat when inside the oven.

10. **METHOD FOR MANUFACTURING PORCELAIN MATERIAL PIECES,** according to any of the above claims, **characterized in that** a zone of the reverse side of the porcelain piece (1) is able to incorporate grooves (10) which facilitate the more rapid arching inside the oven which will also eliminate tensions in the actual piece to treat (1).

11. **METHOD FOR MANUFACTURING PORCELAIN MATERIAL PIECES,** according to any of the above claims, **characterized in that** the support (2) incorporates a succession of perforations (11) in order to transfer the heat when resting on the floor (8) of the oven.

12. **DEVICE FOR MANUFACTURING PORCELAIN MATERIAL PIECES** which, being intended for manufacturing porcelain pieces or pieces of similar material such as red stoneware with a curved and/or convex structure, is **characterized in that** it includes a support (2) with at least one protuberance (3, 3') on its upper face, leaning at least the porcelain piece (1) on at least this protuberance (3, 3').

13. **DEVICE FOR MANUFACTURING PORCELAIN MATERIAL PIECES,** according to claim 12, **characterized in that** the protuberance (3) coincides approximately with the flat geometric center of the porcelain piece (1).

14. **DEVICE FOR MANUFACTURING PORCELAIN MATERIAL PIECES,** according to claim 12, **characterized in that** the protuberance comprises an elongated profile (3'), whose line of support is contained in a vertical plane which divides the porcelain piece (1) into two equal parts.

15. **DEVICE FOR MANUFACTURING PORCELAIN MATERIAL PIECES,** according to claim 12, **characterized in that** the protuberance is a large surface element, on the upper face of which rests at least a large part of the reverse side of the porcelain piece (1).

16. **DEVICE FOR MANUFACTURING PORCELAIN MATERIAL PIECES,** according to claim 12, **characterized in that** the porcelain piece (1) rests on the protuberance via an off-center zone.

17. **DEVICE FOR MANUFACTURING PORCELAIN MATERIAL PIECES,** according to any of claims 12 to 16, **characterized in that** the maximum height of the protuberance on which rests the porcelain piece (1) is less than the thickness of the actual porcelain piece (1).

18. **DEVICE FOR MANUFACTURING PORCELAIN MATERIAL PIECES,** according to any of claims 12 to 16, **characterized in that** the maximum height of the protuberance on which rests the porcelain piece (1) is equal to the thickness of the porcelain piece itself (1).

19. **DEVICE FOR MANUFACTURING PORCELAIN MATERIAL PIECES,** according to any of claims 12 to 18, **characterized in that** the protuberance (3, 3') incorporates channels or openings (9) for dissipating the heat.

20. **DEVICE FOR MANUFACTURING PORCELAIN MATERIAL PIECES,** according to any of claims 12 to 19, **characterized in that** a zone of the reverse side of the porcelain piece (1) is able to incorporate grooves (10).

21. **DEVICE FOR MANUFACTURING PORCELAIN MATERIAL PIECES,** according to any of claims 12 to 20, **characterized in that** the support (2) incorporates a succession of perforations (11).

22. **PRODUCT OBTAINED WITH THE METHOD FOR MANUFACTURING PORCELAIN MATERIAL PIECES, characterized in that** it comprises a convex porcelain piece (1).

23. **PRODUCT OBTAINED WITH THE METHOD FOR MANUFACTURING PORCELAIN MATERIAL PIECES,** according to claim 22, **characterized in that** the convex part of the porcelain piece comprises parallel generatrices giving rise to an arched cavity.

24. **PRODUCT OBTAINED WITH THE METHOD FOR MANUFACTURING PORCELAIN MATERIAL PIECES,** according to claim 23, **characterized in that** the maximum height of the arched cavity is less than the thickness of the actual porcelain piece (1).

25. **PRODUCT OBTAINED WITH THE METHOD FOR MANUFACTURING PORCELAIN MATERIAL PIECES,** according to claim 23, **characterized in that** the maximum height of the arched cavity is equal to the thickness of the porcelain piece (1).

26. **PRODUCT OBTAINED WITH THE METHOD FOR MANUFACTURING PORCELAIN MATERIAL PIECES,** according to claims 22 to 25, **characterized in that** the piece (1) is suitable for being made of red stoneware.
